Europäisches Patentamt

European Patent Office

Office européen des brevets

(11) Veröffentlichungsnummer: **0 298 286 B1**

(12) **EUROPÄISCHE PATENTSCHRIFT**

(45) Veröffentlichungstag der Patentschrift:
03.04.91 Patentblatt 91/14

(21) Anmeldenummer: **88109623.4**

(22) Anmeldetag: **16.06.88**

(51) Int. Cl.⁵ : **A61C 13/265**

(54) Matrize für eine Druckknopfpatrize.

(30) Priorität: **07.07.87 DE 3722327**

(43) Veröffentlichungstag der Anmeldung:
**11.01.89 Patentblatt 89/02**

(45) Bekanntmachung des Hinweises auf die
Patenterteilung:
**03.04.91 Patentblatt 91/14**

(84) Benannte Vertragsstaaten:
**BE DE ES FR GB IT**

(56) Entgegenhaltungen:
**CH-A- 650 917**
**DE-A- 2 952 561**
**DE-A- 3 406 448**

(73) Patentinhaber: **Nova-Pro Attachment GmbH**
**Lindenstrasse 18**
**W-5882 Meinerzhagen (DE)**

(72) Erfinder: **Speckmann, Frank**
**Karl-Halle-Strasse 101**
**W-5800 Hagen (DE)**

(74) Vertreter: **Hassler, Werner, Dr.**
**Postfach 17 04 Asenberg 62**
**W-5880 Lüdenscheid (DE)**

## Beschreibung

Die Erfindung betrifft eine in einen Restgebißaufbau eingießbare Matrize mit einem Augendurchgang für eine Druckknopfpatrize, wobei in den Augendurchgang ein Ringeinsatz aus einem Kunststoff austauschbar einsetzbar ist.

Die DE-OS 35 12 209 beschreibt eine Matrize der genannten Art. Ein Eingießteil ist in den Restgebißaufbau eingießbar. Der Augendurchgang weist ein Innengewinde auf, in das der Ringeinsatz mit einem Außengewinde einschraubbar ist. Im Verschleißfall ist der Ringeinsatz sehr schwer harusnehmbar, insbesondere wenn das Gewinde veformt oder in anderer Weise beschädigt ist. Diese Arbeiten müssen am Restgebiß im Munde des Patienten durchgeführt werden und bedingen unzuträgliche Behinderungen des Patienten. Auch das Einschrauben eines neuen Einsatzteils ist entsprechend mühsam. Unter Wechselbelastung kann sich der Ringeinsatz innerhalb des Gewindes leicht lockern. Es dann möglich, daß der Ringeinsatz mit der Patrize aus der Matrize herausgezogen wird.

Aufgabe der Erfindung ist die Erleichterung der Austauschbarkeit das dem Verschleiß unterliegenden Ringeinsatzes.

Diese Aufgabe wird nach der Erfindung dadurch gelöst, daß der Augendurchgang einen nach innen vorspringenden Ringbund aufweist und daß der Ringeinsatz mit mehreren in radialer Richtung nachgiebigen Segmentzungen formschlüssig in den Ringbund einrastbar ist.

Die Erfindung unterscheidet sich insofern vom Stand der Technik, als der Ringeinsatz als Spritzgießteil mit hoher Genauigkeit hergestellt werden kann und durch Eindrücken in den Augendurchgang einrastbar ist. Die Ringstufen sichern eine genaue Ausrichtung des Ringeinsatzes in axialer Richtung. Der Ringeinsatz ist jederzeit austausch bar. Dieser Ringeinsatz ist jedoch der eigentliche Verschleißteil. Der Ringeinsatz kann mit einem Haken leicht aus dem Augendurchgang herausgezogen werden. Diese Manipulation stellt keine nennenswerte Behinderung für den Patienten dar. Ein neuer Rineinsatz wird dann lediglich eingedrückt und rastet dabei fest. Eine Lockerung der Rastung ist auch unter Wechselbelastung nicht möglich.

Eine genaue Rastung wird dadurch erreicht, daß die Segmentzungen je eine stufenförmige Umfangsprofilrille entsprechend dem Profil des Ringbundes aufweisen.

Eine Klemmung der Druckknopfes der Druckknopfpatrize wird dadurch erreicht, daß das Innenprofil des Ringeinsatzes auf das Außenprofil des Druckknopfes abgestimmt ist.

Eine hohe Verschleißfestigkeit erzielt man dadurch, daß der Ringeinsatz aus einem zähelastischen, seine Form haltenden, reibfesten, verstärkten Kunststoff besteht.

Ferner ist vorgesehen, daß der den Augendurchgang aufweisende Ansatz angußfähig oder aus verbrennbarem Material zum Guß am Modell oder dem Modell des Restgebißaufbaus anmodellierbar ist. Dadurch ist der Ansatz einstückig an dem Restgebißaufbau angußfähig.

Das Angießen an den Restgebißaufbau wird dadurch erleichtert, daß der Eingießteil der Matrize aus einem rückstandfrei verbrennbaren Kunststoff besteht.

Eine Ausführungsform der Erfindung wird im folgenden unter Bezugnahme auf die Zeichnung erläutert, in der darstellen :

Fig. 1 eine teilweise geschnittene Ansicht der Matrize als Eingießteil,

Fig. 2 eine Draufsicht zu Fig. 1 im Einbettungszustand in das Gußmodell,

Fig. 3 eine Unteransicht des Ringeinsatzes in vergrößertem Maßstab,

Fig. 4 eine Seitenansicht zu Fig 3, zur Hälfte geschnitten,

Fig. 5 eine perspektivische Darstellung des Eingießteils mit dem Ringeinsatz und

Fig. 6 einen Schnitt durch die Matrize mit Patrize im Funktionszustand.

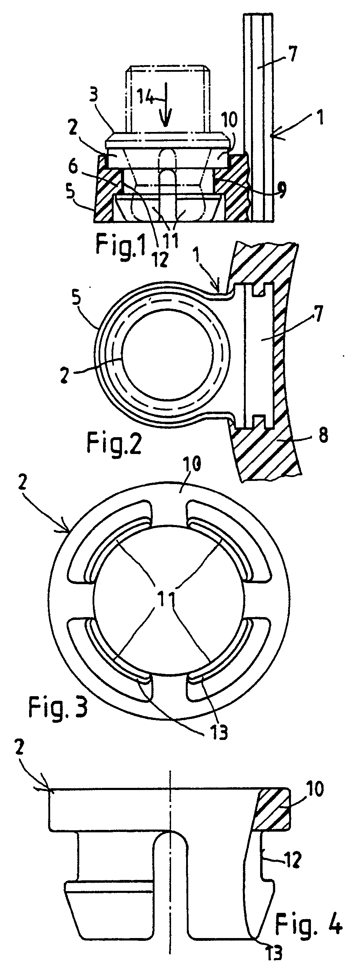

Die Fig. 1 und 2 zeigen das Eingießteil 1 einer Matrize. Das Eingießteil 1 umfaßt einen augenartigen Ansatz 5 mit einem nach innen vorspringenden Ringbund 6, der zwei rechtwinklig abgesetzte, radiale Flächen in Form von Ringstufen aufweist. Der Ringbund 6 bildet einen Augendurchgang 9. An dem augenartigen Ansatz 5 sitzt ein profilierter Steg 7 zur Einformung in ein Gußmodell 8 eines Restgebißaufbaus z.B. einer Krone.

Das Eingießteil 1 wird vom Zahntechniker bei der Modellierung in das Modell des Restgebißaufbaus eingeformt. Dabei erfolgt eine Ausrichtung des augenartigen Ansatzes 5 in einem Parallelgerät oder in anderer Weise. Das Eingießteil 1 besteht aus einem rückstandfrei verbrennbaren Kunststoff, so daß es zusammen mit dem Gußmodell 8 in eine Gießform eingesetzt und im Zuge des Gusses zusammen mit dem Modell 8 rückstandfrei ausgebrannt werden kann. Das Eingießteil 1 ist an dem fertigen Restgebißaufbau vollständig durch Gußmetall nachgebildet. Die Formgebung des Eingießteils 1 liefert also die Gestalt des Gußteils der Matrize an dem Restgebißaufbau. Die Matrize hat so genau die Form des Eingießteils 1 und sitzt einstückig an dem Restgebißaufbau. Das in Fig. 1 dargestellte Eingießteil 1 ist also auch eine Darstellung der Matrize an dem Restgebißaufbau.

Zu der Matrize gehört ein Ringeinsatz 2 aus einem verstärkten Kunststoff. Hierbei handelt es sich z. B. um einen Kunststoff auf Polyamidbasis oder Polycarbonatbasis, der einen Füllstoff enthält, um die Festigkeit des Kunststoffes zu erhöhen. Es kann sich hierbei um eine Faserverstärkung handeln. Dieser Kunststoff, der durch Spritzgießen formbar ist, ist zähelastisch und reibfest und außerdem seine Form haltend, so daß er unter Belastung seine Form elastisch ändert und bei Nachlassen der Belastung die ursprüngliche Form wieder einnimmt.

Der Ringeinsatz 2 umfaßt einen Ringflansch 10, der genau in die obere Stufe des Ringbundes 6, bezogen auf Fig. 1, paßt. An dem Ringflansch 10 sitzen mehrere, vorzugsweise vier Segmentzungen 11, die in radialer Richtung nachgiebig sind und die eine Umfangsprofilrille 12 entsprechend der Profilierung des Ringbundes 6 aufweisen. Die Segmentzungen 11 endigen in spitzauslaufende Stirnkanten 13.

Die fertig gegossene Matrize entspricht genau dem in Fig. 1 dargestellten Eingießteil 1. Sie nimmt den Ringeinsatz 2 auf. Der Ringeinsatz 2 ist in Pfeilrichtung 14 in Fig. 1 in den Augendurchgang 9 des augenartigen Ansatzes 5 eingedrückt und eingerastet. Dabei werden die Segmentzungen 11 in radialer Richtung nach innen gedrückt und gleiten über den Ringbund 6. In der Endstellung federn die Segmentzungen 11 zurück, wobei sich jede Umfangsprofilrille 12 formschlüssig an den Ringbund 6 anlegt und mit ihrer vorspringenden Kante hinter die untere Ringstufe des Ringbundes rastet. Diese Stellung ist in Fig. 1 eingezeichnet.

Fig. 1 zeigt ferner in strichpunktierten Linien den Umriß einer Druckknopfpatrize, die in den Durchgang des Ringeinsatzes 2 eingedrückt ist und sich federnd festhält. Der Ringeinsatz 2 besteht aus dem genannten Kunststoff und hat eine außerordentlich hohe metallähnliche Festigkeit, so daß ein sicherer Halt der Druckknopfpatrize 3 gewährleistet ist. Der Ringeinsatz unterliegt einem Verschleiß. Wenn der Ringeinsatz beschädigt oder zerstört weren sollte, so kann er jederzeit ausgetauscht werden. Nach Herausnehmen des alten Ringeinsatzes mit einem Haken läßt sich ein neuer Ringeinsatz 2 in den Durchgang des augenartigen Ansatzes 5 des Restgebißaufbaus eindrücken und festrasten.

Die Matrize nach der Erfindung hat eine nahezu unbegrenzte Lebensdauer, weil ein Austausch oder Ersatz des Ringeinsatzes mehrfach möglich ist, ohne daß an dem Restgebißaufbau Befestigungsarbeiten, etwa Lötarbeiten oder dergleichen durchgeführt werden müssen. Das Einsetzen des Ringeinsatzes 2 ist durch den Zahntechniker oder den Zahnarzt ohne weiteres im Rahmen einer Behandlung des Patienten möglich.

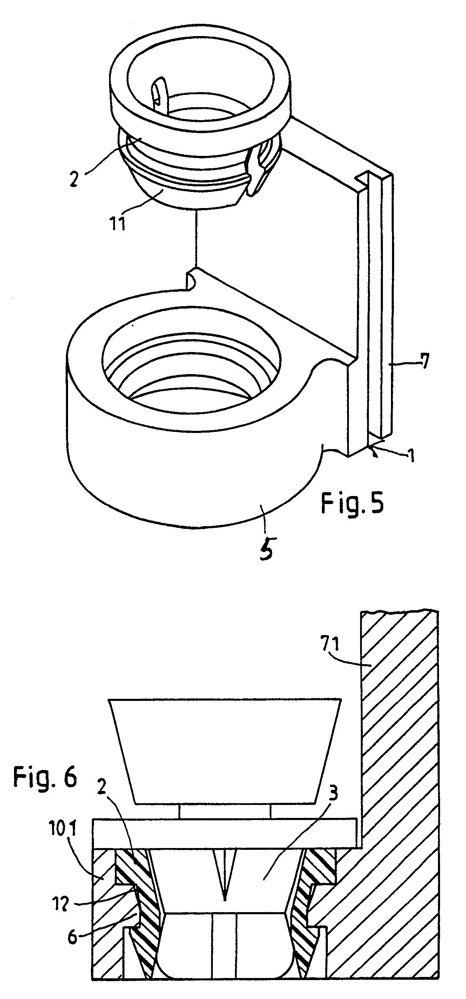

Fig. 5 zeigt nochmals in perspektivischer Einzeldarstellung das Eingießteil 1 und den Ringeinsatz 2.

Fig. 6 zeigt einen Ausschnitt aus dem fertigen Gußteil. Die Matrize ist als Gußteil 101 ausgebildet und sitzt an dem Kronenteil 71. Der Ringeinsatz 2 ist eingerastet, und die Druckknopfpatrize 3 ist eingedrückt. Die Druckknopfpatrize 3 verstärkt nach dem Eindrücken die Rastverbindung des Ringeinsatzes, indem die Umfangsprofilrille 12 in den Ringbund 6 eingedrückt wird. Dadurch wird verhindert, daß der Ringeinsatz mit der Druckknopfpatrize heruasgezogen werden kann. Ein Lockern des Ringeinsatzes durh Wechselbelastungen ist nicht möglich.

## Ansprüche

1. Matrize, die in einen Restgebißaufbau eingießar ist, mit einem Augendurchgang (9) für eine Druckknopfpatrize (3), wobei in den Augendurchgang ein Ringeinsatz (2) aus einem Kunststoff austauschbar einsetzbar ist, dadurch gekennzeichnet, daß der Augendurchgang (9) einen nach innen vorspringenden Ringbund (6) aufweist und daß der Ringeinsatz (2) mit mehreren in radialer Richtung nachgiebigen Segmentzungen (11) formschlüssig in den Ringbund (6) einrastbar ist.

2. Matrize nach Anspruch 1, dadurch gekennzeichnet, daß die Segmentzungen (11) je eine stufenförmige Umfangsprofilrille (12) entsprechend dem Profil des Ringbundes (6) aufweisen.

3. Matrize nach Anspruch 1 oder 2, dadurch gekennzeichnet, daß das Innenprofil des Ringeinsatzes (2) auf das Außenprofil des Druckknopfes abgestimmt ist.

4. Matrize nach einem der Ansprüche 1 bis 4, dadurch gekennzeichnet, daß der Ringeinsatz aus einem zähelastischen, seine Form haltenden, reibfesten, verstärkten Kunststoff besteht.

5. Matrize nach einem der Ansprüche 1 bis 4, dadurch gekennzeichnet, daß der den Augendurchgang aufweisende Ansatz (5) angußfähig oder aus verbrennbarem Material zum Guß am Modell oder dem Modell des Restgebißaufbaus anmodellierbar ist.

6. Matrize nach Anspruch 5, dadurch gekennzeichnet, daß der Eingießteil der Matrize aus einem rückstandfrei verbrennbaren Kunststoff besteht.

## Claims

1. Female piece which is able to be moulded into a set of remaining teeth, with an eye passage (9) for a snap-fit male piece (3), a ring insert (2) of synthetic material being able to be inserted interchangeably in the eye passage, characterised in that the eye passage (9) comprises an inwardly projecting collar (6) and that the ring insert (2) can be engaged positively in the collar (6) by a plurality of segmental tongues (11), which are resilient in the radial direction.

2. Female piece according to Claim 1, characterised in that the segmental tongues (11) each comprise a step-like peripheral profiled groove (12) corresponding to the profile of the collar (6).

3. Female piece according to Claim 1 or 2, characterised in that the internal profile of the ring insert (2) is adapted to the external profile of the snap fastener.

4. Female piece according to one of Claims 1 to 4, characterised in that the ring insert consists of a ductile, reinforced synthetic material, which retains its shape and is resistant to abrasion.

5. Female piece according to one of Claims 1 to 4, characterised in that the projection (5) comprising the eye passage is able to be attached by moulding or can be moulded from combustible material for moulding on the model or can be moulded on the model of the remaining set of teeth.

6. Female piece according to Claim 5, characterised in that the moulding part of the female piece consists of a synthetic material which is combustible without residue.


## Revendications

1. Pièce femelle, qui peut être moulée dans une structure de denture restante, comprenant un passage (9) pour une pièce mâle (3) en forme de bouton-poussoir, un insert annulaire (2) en une substance synthétique pouvant être introduit de manière échangeable dans le passage, caractérisée en ce que le passage (9) présente un collet annulaire (6) faisant saillie vers l'intérieur et en ce que l'insert annulaire (2) peut être engagé dans le collet annulaire (6) par une liaison de forme à l'aide de plusieurs languettes (11) en forme de segment, flexibles en direction radiale.

2. Pièce femelle suivant la revendication 1, caractérisée en ce que les languettes (11) en forme de segment présentent chacune une gorge profilée périphérique (12) en forme de gradin, d'une manière correspondant au profil du collet annulaire (6).

3. Pièce femelle suivant l'une des revendications 1 et 2, caractérisée en ce que le profil intérieur de l'insert annulaire (2) est accordé au profil extérieur du bouton-poussoir.

4. Pièce femelle suivant l'une des revendications 1 à 4, caractérisée en ce que l'insert annulaire est constitué d'une substance synthétique renforcée, résistant au frottement, stable de forme et résiliente.

5. Pièce femelle suivant l'une des revendications 1 à 4, caractérisée en ce que l'appendice (5) présentant le passage est coulable ou est en une matière combustible pour la coulée sur le modèle ou est modelable sur le modèle de la structure de denture restante.

6. Pièce femelle suivant la revendication 5, caractérisée en ce que la pièce de coulée de la matrice est constituée d'une matière synthétique combustible sans résidu.

Fig.1

Fig.2

Fig. 3

Fig. 4

Fig.5

2

11

7

1

5

Fig. 6

71

2

3

10 1

12

6